# EUROPEAN PATENT SPECIFICATION

(11) **EP 4 240 573 B1**
(45) Date of publication and mention of the grant of the patent: **01.01.2025**
(21) Application number: 21816522.3
(22) Date of filing: 03.11.2021
(51) Int. Cl.: B29C 53/08, B31F 1/00, B29L 23/00, B31D 5/00, B65B 19/34

(54) **METHOD AND UNIT TO BEND A STRAW**
VERFAHREN UND VORRICHTUNG ZUM BIEGEN EINES STROHHALMS
MÉTHODE ET UNITÉ POUR PLIER UNE PAILLE

(30) Priority: 03.11.2020 IT 202000026155
(43) Date of publication of application: 13.09.2023
(73) Proprietor: G.D SOCIETA' PER AZIONI, 40133 Bologna (IT)
(72) Inventor: FAZZIOLI, Fabrizio, 40133 Bologna (IT); GAMBERINI, Giuliano, 40133 Bologna (IT)
(74) Representative: Studio Torta S.p.A.
(86) International application number: PCT/IB2021/060179
(87) International publication number: WO 2022/097041

(56) References cited:
- CN-A- 111 055 486
- US-A- 3 493 998

## Description

### CROSS-REFERENCE TO RELATED APPLICATIONS

This patent application claims priority from Italian patent application no. 102020000026155 filed on November 3, 2020.

### TECHNICAL FIELD

The present invention relates to a method and to a unit to bend a straw.

### PRIOR ART

Straws are known which provide a corrugated intermediate portion in order to allow the bending of the straw so as to assume the most suitable shape in use to satisfy the user.

For some applications, a straw is packaged individually (namely, it is inserted singly into its own wrap) after being bent in a "U"-shape (namely, by 180°) at the corrugated intermediate portion (the purpose of bending in a "U"-shape is to reduce the overall dimensions of the straw); typically, it is required to individually package the "U"-bent straws when the straws have to be fixed (glued) to the back wall of a beverage container.

The Patent application CN111055486A represents the closest prior art and describes a high-speed straw bending machine.

### DESCRIPTION OF THE INVENTION

The object of the present invention is to provide a method and a unit to bend a straw that allow operating at a high processing speed (measured by the number of pieces produced per unit of time) while, at the same time, maintaining a high production quality (namely, without damaging the straw during bending).

According to the present invention, a method and a unit to bend a straw are provided, according to what is established in the attached claims.

The claims describe preferred embodiments of the present invention forming an integral part of the present description.

### BRIEF DESCRIPTION OF THE DRAWINGS

The present invention will now be described with reference to the attached drawings, which illustrate a non-limiting embodiment thereof, wherein:
- Figure 1 is a perspective view of a straw applied to a beverage package;
- Figure 2 is a view on an enlarged scale of the straw of Figure 1;
- Figure 3 is a schematic and front view of a packing machine which bends and wraps the straw of Figure 1;
- Figure 4 shows a series of schematic and cross-sectional views of a seat of a bending drum of the packing machine of Figure 3 which illustrate the sequence for bending the straw of Figure 1;
- Figure 5 is a view on an enlarged scale of Figure 4l with the addition of a plan view of the seat of the bending drum;
- Figure 6 is a view on an enlarged scale of Figure 4e;
- Figure 7 is a perspective view of the bending drum of Figures 4; and
- Figures 8, 9 and 10 are different views of two bending elements and of an accompanying element coupled to the bending drum of Figures 4.

### PREFERRED EMBODIMENTS OF THE INVENTION

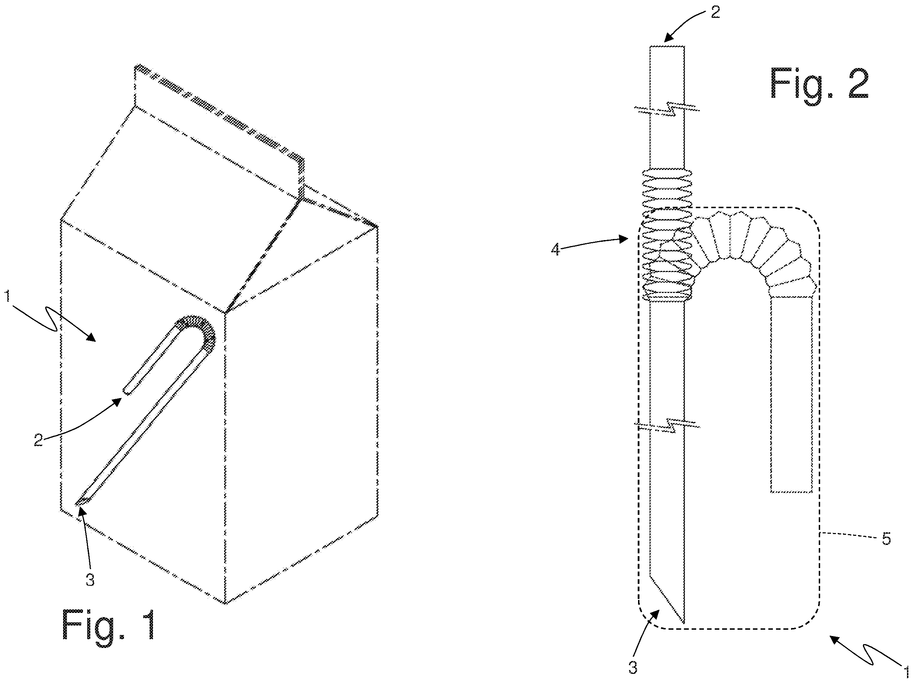

In Figure 1, number 1 denotes as a whole a straw (made of paper or plastic) which is applied to the back of a beverage package. The straw 1 has a flat end 2 (which is grasped by the user's lips) and a pointed end 3 (to more effectively break through the cap that seals a dispensing opening of the package).

In addition, the straw 1 has a corrugated intermediate portion 4 at which the straw 1 can be easily bent and without breaking (namely, in an elastic manner) so as to assume in use the most suitable shape to satisfy the user.

The straw 1 is packaged individually (namely, it has been inserted singly in its own wrap 5 not illustrated in Figure 1 and illustrated in Figure 2) after being bent in a "U"-shape (namely, by 180°) at the corrugated intermediate portion 4 (the purpose of the "U"-bending is to reduce the overall dimensions of the straw 1 in order to remain within the overall dimensions of the back wall of the package to which the straw 1 is applied).

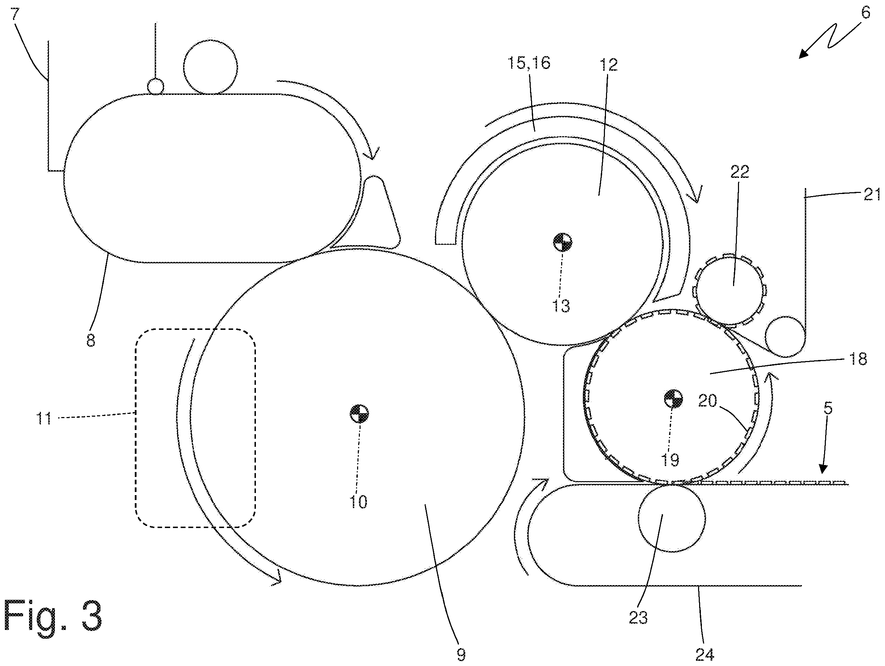

In Figure 3, number 6 denotes as a whole a packing machine which receives the straws 1 from a manufacturing machine (not illustrated), corrugates the straws 1, bends the straws 1 in a "U"-shape, and inserts the straws 1 in corresponding wraps 5.

The packing machine 6 comprises a hopper 7 which is designed to contain a mass of straws 1 coming from the manufacturing machine and which move progressively downwards by gravity, namely, towards the bottom of the hopper 7. As an alternative to the hopper 7, the packing machine 6 could provide any type of buffer or collector for a mass of straws. As a further alternative, the packing machine 6 could receive the straws in an orderly manner (namely, not collected in a mass), for example directly from the manufacturing machine.

A pick-up conveyor 8 is arranged on the bottom of the hopper 7, the conveyor picks up a succession of straws 1 by feeding the latter crosswise (namely, perpendicularly to a longitudinal axis of the straws 1); according to a preferred embodiment, the pick-up conveyor 8 is a conveyor belt, namely, it comprises a flexible belt which is closed in a loop around two end pulleys and supports a plurality of suction seats, each designed to house a corresponding straw 1. According to embodiments not illustrated, the pick-up conveyor 8 could comprise one or more conveying drums; at least one of these conveying drums could be a conical drum.

The packing machine 6 comprises a corrugator drum 9 which is mounted so as to rotate around a rotation axis 10, has a plurality of suction seats each designed to house a corresponding straw 1, and receives the straws 1 directly from the pick-up conveyor 8. A corrugator device 11 is arranged along the periphery of the corrugator drum 9, which corrugates the straws 1, namely, creates the corrugated intermediate portion 4 of each straw 1.

According to an embodiment not illustrated, the packing machine 6 could receive already corrugated straws 1; in this case, the packing machine 6 does not comprise any corrugator drum 9.

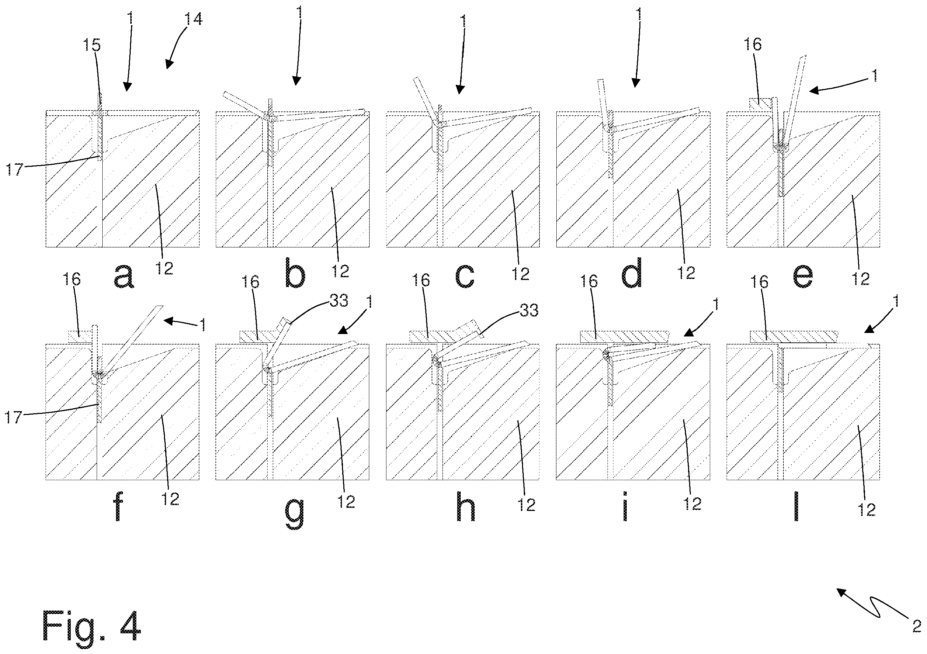

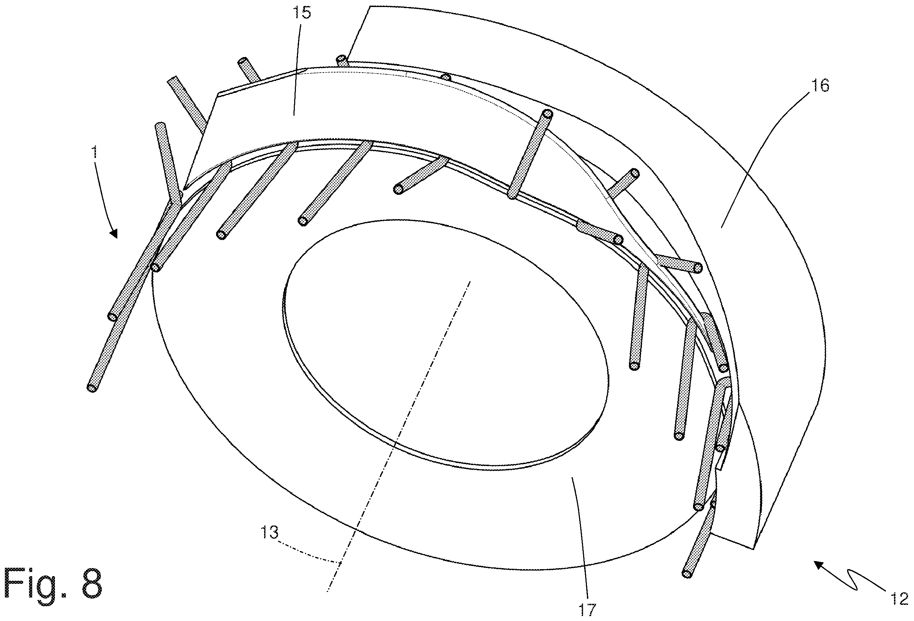

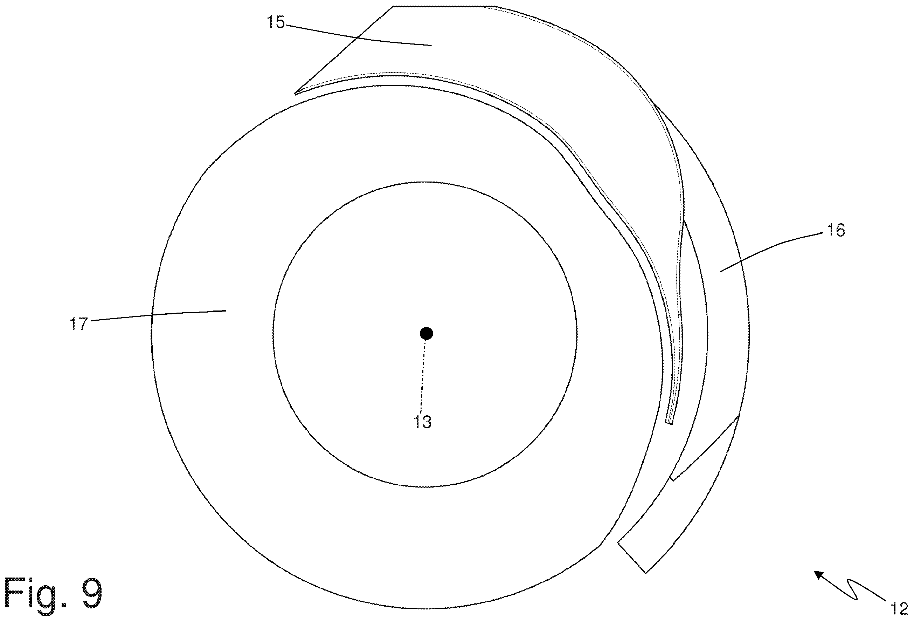

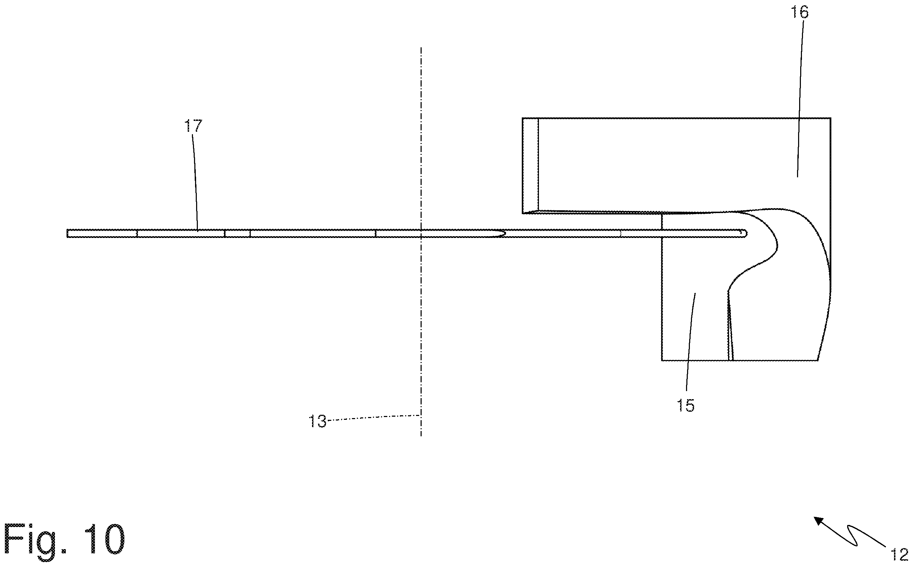

The packing machine 6 comprises a bending drum 12 which is mounted so as to rotate around a rotation axis 13 (parallel to the rotation axis 10), has a plurality of suction seats 14 (illustrated in Figures 4-7) each designed to house a corresponding straw 1, and receives the straws 1 directly from the corrugator drum 9. Two bending elements 15 and 16 and an accompanying element 17 (better illustrated in Figures 8, 9 and 10) are arranged around the rotation axis 13 in a fixed position (namely, integral with a frame of the packing machine 6 and, therefore, motionless), which are coupled to the bending drum 12 and interact with the straws 1 carried by the suction seats 14 for bending the straws 1 in a "U"-shape.

The packing machine 6 comprises a wrapping drum 18 which is mounted so as to rotate around a rotation axis 19 (parallel to the rotation axis 13), has a plurality of suction seats 20 each designed to house a wrapping sheet and a straw 1 bent in a "U"-shape. Each suction seat 20 of the wrapping drum 18 receives a strip 21 of wrapping material which is bent in a "U"-shape inside the suction seat 20 (where it is held by suction) and then receives a straw 1 bent in a "U"-shape (which is arranged inside the strip 21 of wrapping material bent in a "U"-shape) subsequently and directly from the bending drum 12. In particular, an inserter drum 22 is provided which inserts, in each suction seat 20 of the wrapping drum 18, a portion of the strip 21 of wrapping material that is bent in a "U"-shape inside the suction seat 20. An applicator drum 23 is coupled to the wrapping drum 18, which applies, to each wrapping sheet bent in a "U"-shape and containing a straw 1 bent in a "U"-shape, a corresponding lid (defined by a further strip of wrapping material, thus completing the formation of a wrap 5) which is fixed by heat sealing or by gluing (thanks to the presence of glue which is previously applied to the strip 21 of wrapping material or to the lid).

The packing machine 6 comprises an outlet conveyor 24 which receives a continuous strip of wraps 5 containing respective straws 1 from the wrapping drum 18 and feeds the wraps 5 towards an outlet of the packing machine 6.

According to a particular embodiment, the outlet conveyor 24 is a conveyor belt, namely, it comprises a flexible belt which is closed in a loop around two end pulleys and supports a plurality of suction seats each designed to house a corresponding wrap 5. According to a preferred embodiment, the applicator drum 23 is arranged at the exchange station between the wrapping drum 18 and the outlet conveyor 24.

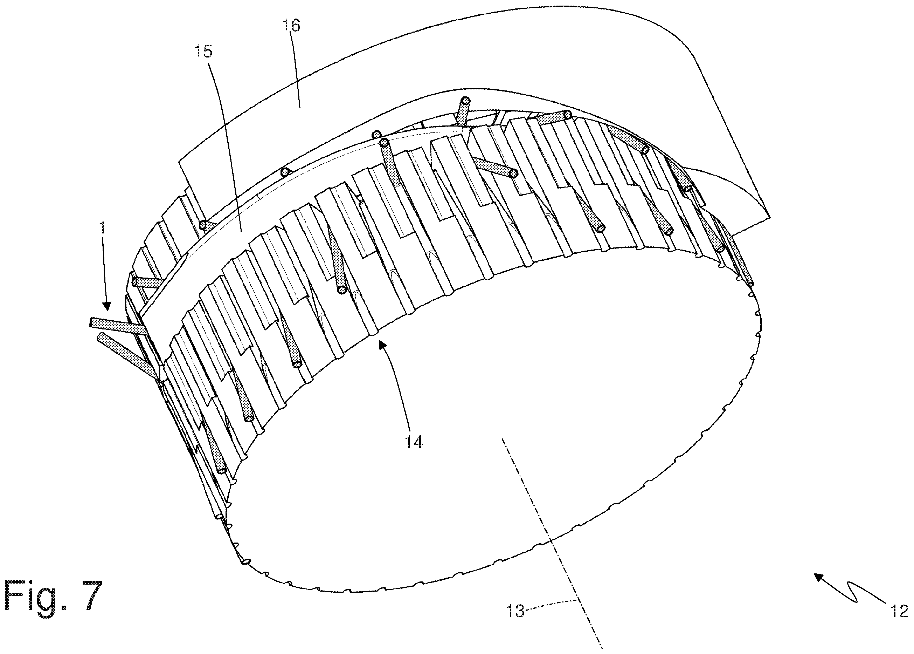

As illustrated in Figures 7-10, the bending element 15 is shaped like an arc of a circle, is arranged in a fixed position around the rotation axis 13 and has a radial position which is variable so that the rotation of the bending drum 12 causes a progressive relative radial movement between the bending element 15 and the seats 14; namely, each seat 14 rotating around the rotation axis 13 together with the rest of the bending drum 12, *"perceives"* a radial movement of the bending element 15 due to the variation of the radial position of the bending element 15 along its circumferential extension. It is important to note that the variable radial position of the bending element 15 refers to the active side of the bending element 15, namely, the side of the bending element 15 that comes into contact with the straws 1 carried by the seats 14.

According to what is illustrated in Figures 7-10, the bending element 16 is shaped like an arc of a circle, is arranged in a fixed position around the rotation axis 13 and has an axial position which is variable so that the rotation of the bending drum 12 causes a relative progressive axial movement between the bending element 16 and the seats 14; namely, each seat 14 rotating around the rotation axis 13 together with the rest of the bending drum 12, *"perceives"* an axial movement of the bending element 16 due to the variation of the axial position of the bending element 16 along its circumferential extension. It is important to note that the variable axial position of the bending element 16 refers to the active side of the bending element 16, namely, the side of the bending element 16 that comes into contact with the straws 1 carried by the seats 14.

According to what is illustrated in Figures 8-10, the accompanying element 17 is ring-shaped (but alternatively it could be shaped only like an arc of a circle since a part of the accompanying element 17 has no active function, that is, it never makes contact with the straws 1 carried by the seats 14), is arranged in a fixed position around the rotation axis 13 and has a radial position which is variable so that the rotation of the bending drum 12 causes a relative progressive radial movement between the accompanying element 17 and the seats 14; namely, each seat 14 rotating around the rotation axis 13 together with the rest of the bending drum 12, *"perceives"* a radial movement of the accompanying element 17 due to the variation of the radial position of the accompanying element 17 along its circumferential extension . It is important to note that the variable radial position of the accompanying element 17 refers to the active side of the accompanying element 17, namely, the side of the accompanying element 17 that comes into contact with the straws 1 carried by the seats 14.

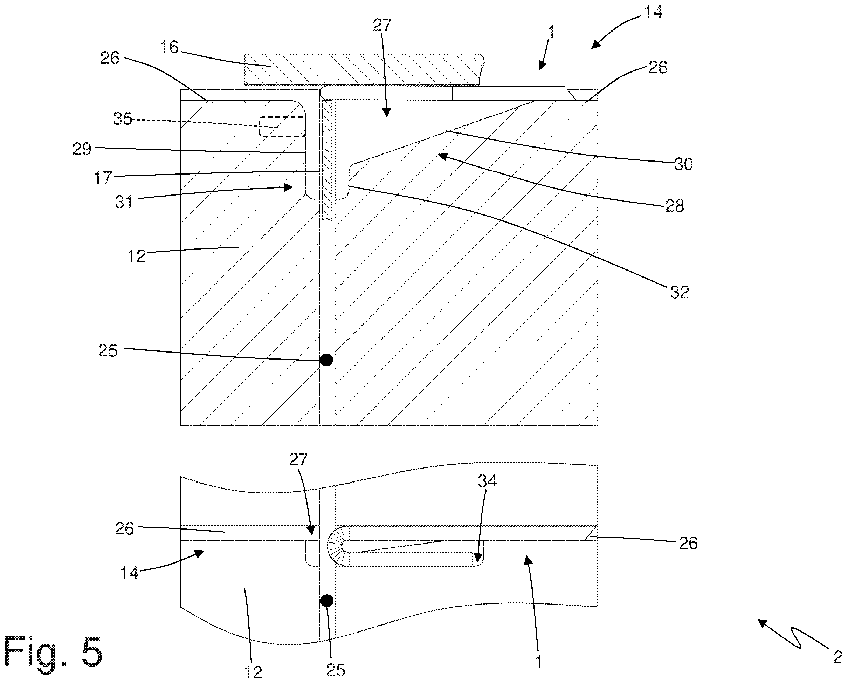

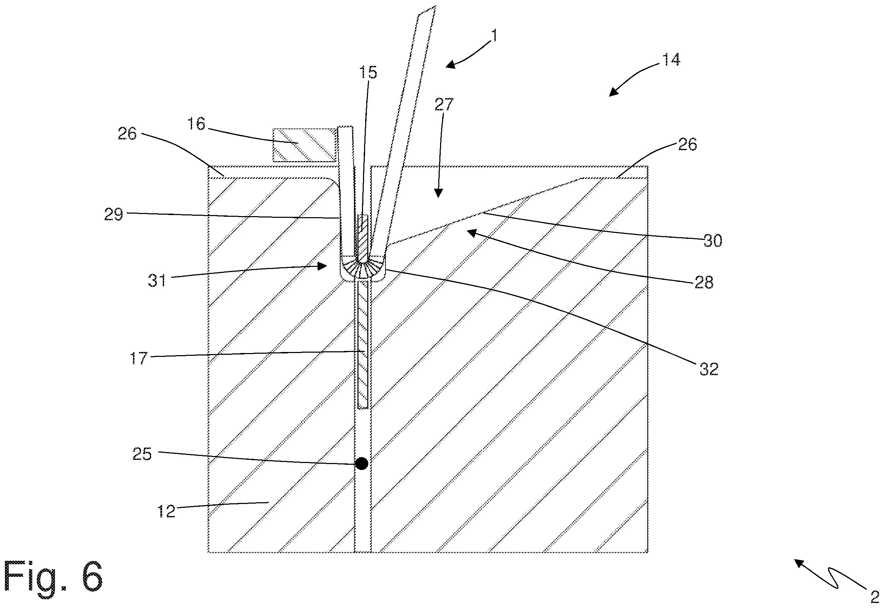

According to what is illustrated in Figures 5 and 6, the bending drum 12 has a central circumferential slit 25 (i.e., which develops for 360° around the rotation axis 13), which is oriented radially and is configured to contain the accompanying element 17; namely, the accompanying element 17 is arranged inside the circumferential slit 25 of the bending drum 12.

According to what is illustrated in Figures 5 and 6, each seat 14 comprises two suction walls 26 (namely, provided with small holes that can be connected when necessary to a suction source) which are axially oriented, are arranged at a certain distance from one another, and are designed to receive and hold two opposite ends of a straight straw 1 (namely, without bends and, therefore, still having a completely rectilinear shape) . According to what is illustrated in Figure 7, the two suction walls 26 have a semi-circle shape to reproduce in negative the shape of a straw 1 and, therefore, also to laterally contain a straw 1.

According to what is illustrated in Figures 5 and 6, at each seat 14 the bending drum 12 is provided with a cavity 27 (namely, a hole) which is radially arranged further inwards than the seat 14, namely, it extends starting from the seat 14 towards the centre (namely, the rotation axis 13). In particular, the circumferential slit 25, which contains the accompanying element 17, opens into the cavity 27, namely the circumferential slit 25 originates from a bottom of each cavity 27. Each cavity 27 has an outer portion 28 delimited on one side by a wall 29 radially arranged and, on the opposite side, by a wall 30 that forms an acute angle (of the order of about 60°) with the wall 29 (and remains at a certain distance from the wall 29); furthermore, each cavity 27 has an inner portion 31 which is radially arranged further inwards than the outer portion 28 and is delimited on one side by the wall 29 (namely, by the same radially arranged wall 29, which also delimits the outer portion 28) and on the opposite side by a wall 32 that is connected to the wall 30 (namely, it forms a joining corner with the wall 30) and is arranged radially and, therefore, parallel to the wall 29.

The methods for bending a straw 1 in a "U"-shape in the bending drum 12 are described in the following and with particular reference to what is illustrated in Figures 4.

Initially, and as illustrated in Figure 4a, the straw 1 is fed straight to the seat 14 and then the two opposite ends of the straw 1 engage the two walls 26 of the seat 14 (which initially hold the straw 1 by suction).

Subsequently and as illustrated in Figures 4b-4e, the straw 1 is progressively pushed into the cavity 27 by means of the action of the bending element 15 which moves radially relative to the seat 14 for at least partially bending the straw 1 in a "U"-shape against (at least) the wall 29 of the cavity 27; the introduction of the straw 1 into the cavity 27 is accompanied by means of the action of the accompanying element 17, which is arranged on the opposite side of the straw 1 relative to the bending element 15 and moves radially relative to the seat 14 (namely, the bending element 15 and the accompanying element 17 *"pinch"* the straw 1 between one another to guide the radial movement of the straw 1 on both sides and, therefore, control the exact radial position of the straw 1 at all times).

According to a preferred embodiment illustrated in Figure 4e (and also in Figure 6 which reproduces Figure 4e on an enlarged scale), the bending element 15 pushes the straw 1 inside the inner portion 31 of the cavity 27 until it reaches a bottom of the inner portion 31, namely, until the straw 1 is in contact with the bottom of the inner portion 31.

According to what is illustrated in Figure 4f, once the straw 1 is at least partially bent in a "U"-shape inside the inner portion 31 of the cavity 27, the at least partially "U"-bent straw 1 is subsequently extracted from the inner portion 31 of the cavity 27 by pushing the straw 1 radially outwards by means of the action of the accompanying element 17 (which is arranged on the opposite side of the straw 1 relative to the bending element 15 and moves radially relative to the seat 14) .

As illustrated in Figures 4g and 4h, simultaneously with the radial thrust towards the outside of the straw 1 at least partially bent in a "U"-shape, operated by the accompanying element 17, the bending element 16 also intervenes by starting to push the straw 1 at least partially bent in a "U"-shape and extracted from the inner portion 31, against the wall 30 of the outer portion 28 of the cavity 27. According to a preferred embodiment illustrated in Figures 4g and 4h, the bending element 16 comprises a holding tooth 33 which engages the end 2 of the straw 1 so as to prevent the straw 1 from being (accidentally and obviously in a completely undesired manner) elasticity *"shot"* out of the cavity 25 while being bent against the wall 30 of the outer portion 28. According to what is illustrated in Figure 4i, by means of the action of the bending element 16 the bending of the straw 1 in a "U"-shape is completed by pushing the at least partially "U"-bent straw 1 against the wall 30 of the outer portion 28.

Finally, and as illustrated in Figure 4l, the straw 1 completely bent in a "U"-shape is rotated by 90° by means of the action of the bending element 16 so as to be arranged *"flat"* (instead of *"standing upright"*), consequently coming out of the cavity 27 (as better illustrated in Figure 5, which reproduces Figure 4l on an enlarged scale). Preferably, the accompanying element 17 pushes the straw 1 towards the bending element 16 until the rotation by 90° of the completely "U"-bent straw 1, keeping the straw 1 clamped between the accompanying element 17 and the bending element 16.

Preferably, the cavity 27 has a circumferential width which is only slightly larger than the thickness of the straw 1 (as illustrated in Figure 5) so as to be able to contain the partially or completely "U"-bent straw 1 only when the partially or completely "U"-bent straw 1 is arranged *"standing upright"* (namely, it is radially oriented). Beside the cavity 27 a housing 34 is obtained, (illustrated in Figure 5), which is shaped so as to contain the completely "U"-bent straw 1 after its rotation by 90° and, therefore, after its extraction from the cavity 27; namely, the rotation by 90° causes the extraction of the completely "U"-bent straw 1 from the cavity 27 and the subsequent insertion of the completely "U"-bent straw 1 into the housing 34.

According to a possible embodiment illustrated in Figure 5, the wall 29 of each cavity 27 is provided with a pneumatic device 35 which can be operated to generate a blast of compressed air which pushes the straw 1 towards the wall 30 of the outer portion 28; the function of the pneumatic device 35 (which is activated only when the at least partially "U"-bent straw is extracted from the inner portion 31 of the cavity 27) is to prevent a straw 1 from remaining too close to the wall 29 and, therefore, not being able to be rotated correctly by 90° in order to be extracted from cavity 27 and inserted into the housing 34.

According to a preferred embodiment, the packing machine 6 operates on a double line, namely, it processes two straws 1 at a time arranged end to end (namely, axially aligned with one another). In other words, the pick-up conveyor 8 has a series of pairs of suction seats (axially aligned with one another) to pick-up two straws 1 at a time from the outlet mouth of the hopper 7 and the corrugator drum 9 has a series of pairs of suction seats (axially aligned with one another) which simultaneously receive two straws 1 from the pick-up conveyor 8, simultaneously corrugate two straws 1 together with the corrugator device 11, and simultaneously release two straws 1 to the bending drum 12. According to a further alternative, the pick-up conveyor 8 has a series of suction seats having a length double the length of a straw to pick-up a semi-finished product having a length double that of a straw from the outlet mouth of the hopper 7. In this case, a cutting member can be arranged at the pick-up conveyor 8 to cut, with a straight or inclined cut, the semi-finished product into two straws. These two straws will then be transferred to the corrugator drum 9 as described above.

In turn, the bending drum 12 has a series of pairs of suction seats 14 (axially aligned with one another) which simultaneously receive two straws 1 from the corrugator drum 9, simultaneously bend two straws 1 (operating with two respective pairs of elements 15, 16 and 17), and simultaneously release two straws 1 to the wrapping drum 18. In turn, the wrapping drum 18 has a series of pairs of suction seats 20 (axially aligned with one another) which simultaneously receive two straws 1 from the bending drum 12, simultaneously produce two wraps 5 (operating with a strip 21 of wrapping material having double width), and simultaneously transfer two wraps 5 to the outlet conveyor 24. In turn, the outlet conveyor 24 has a series of pairs of suction seats (axially aligned with one another) which simultaneously receive two wraps 5 from the wrapping drum 18.

According to a different embodiment, the packing machine 6 operates on a single line, namely, it processes only one straw 1 at a time.

According to a further embodiment, the packing machine 6 operates on a triple or quadruple line, namely, it processes three or four straws 1 at a time arranged end to end (namely, axially aligned with one another).

The embodiments described herein can be combined with each other.

The bending unit described above (essentially formed by the bending drum 12 and by the elements 15, 16 and 17) has numerous advantages.

Firstly, the bending unit described above allows to operate at a high processing speed (measured as the number of pieces produced in a unit of time) while, at the same time, maintaining a high production quality (namely, without damaging the straws 1 during bending).

Furthermore, the bending unit described above is simple, inexpensive and compact to implement, as it does not have any moving parts but only elements 15, 16 and 17, which are suitably shaped and are arranged in a fixed position around the rotation axis 13.

## Claims

1. A method to bend a straw (1) comprising the steps of:
causing a bending drum (12), which is provided with at least one seat (14) designed to house the straight straw (1) and with a cavity (27) arranged at the seat (14) and radially more on the inside than the seat (14), to rotate around a rotation axis (13);
feeding the straight straw (1) to the seat (14); and
pushing the straw (1) into the cavity (27) by means of the action of a first bending element (15), which radially moves relative to the seat (14) for at least partially bending the straw (1) in a "U"-shape against at least one wall (29) of the cavity (27).

2. The bending method according to claim 1, wherein the first bending element (15) is shaped like an arc of a circle, is arranged in a fixed position around the rotation axis (13) and has a radial position which is variable so that the rotation of the bending drum (12) causes a progressive relative radial movement between the first bending element (15) and the seat (14) .

3. The bending method according to claim 1 or 2 and comprising the further step of accompanying the introduction of the straw (1) into the cavity (27) by means of the action of an accompanying element (17), which is arranged on the opposite side of the straw (1) relative to the first bending element (15) and radially moves relative to the seat (14).

4. The bending method according to claim 3, wherein the accompanying element (17) is at least shaped like an arc of a circle, is arranged in a fixed position around the rotation axis (13) and has a radial position which is variable so that the rotation of the bending drum (12) causes a progressive relative radial movement between the accompanying element (17) and the seat (14).

5. The bending method according to claim 4, wherein the bending drum (12) has a slit (25), which is radially oriented, originates from a bottom of the cavity (27) and is configured to contain the accompanying element (17).

6. The bending method according to one of the claims from 1 to 5, wherein the cavity (27) has:
an outer portion (28), which is delimited, on one side, by a first radially arranged wall (29) and, on the opposite side, by a second wall (30), which forms an acute angle with the first wall (29) and is arranged at a certain distance from the first wall (29); and
an inner portion (31), which is radially arranged further inwards than the outer portion (28) and is delimited, on one side, by the first wall (29) and, on the opposite side, by a third wall (32), which is joined to the second wall (30) and is arranged radially and, therefore, parallel to the first wall (29).

7. The bending method according to claim 6, wherein the first wall (29) is provided with a pneumatic device (35), which can be operated in order to generate a blast of compressed air, which pushes the straw (1) towards the second wall (30) of the outer portion (28).

8. The bending method according to claim 6 or 7, wherein the first bending element (15) pushes the straw (1) into the inner portion (31) of the cavity (27).

9. The bending method according to claim 8 and comprising the further step of extracting the at least partially "U"-bent straw (1) from the inner portion (31) of the cavity (27) by radially pushing the straw (1) outwards by means of the action of an accompanying element (17), which is arranged on the opposite side of the straw (1) relative to the first bending element (15) and radially moves relative to the seat (14).

10. The bending method according to claim 9 and comprising the further step of pushing the straw (1), which is at least partially "U"-bent and extracted from the inner portion (31), against the second wall (30) of the outer portion (28) by means of the action of a second bending element (16), which axially moves relative to the seat (14).

11. The bending method according to claim 10, wherein:
the second bending element (16) is shaped like an arc of a circle, is arranged in a fixed position around the rotation axis (13) and has an axial position which is variable so that the rotation of the bending drum (12) causes a progressive relative axial movement between the second bending element (16) and the seat (14); and
the second bending element (16) comprises a holding tooth (33), which engages an end (2) of the straw (1).

12. The bending method according to claim 10 or 11 and comprising the further steps of:
completing the bending of the straw (1) in a "U"-shape by pushing the at least partially "U"-bent straw (1) against the second wall (30) of the outer portion (28) by means of the action of the second bending element (16), which axially moves relative to the seat (14); and
rotating the straw (1) completely bent in a "U"-shape by 90° by means of the action of the second bending element (16).

13. The bending method according to claim 12, wherein:
the cavity (27) has a circumferential width which is only slightly greater than a thickness of the straw (1) so as to be able to contain the at least partially "U"-bent straw (1) only when the at least partially "U"-bent straw (1) is radially oriented; and
beside the cavity (27) a housing (34) is obtained, which is shaped so as to contain the completely "U"-bent straw (1) after its rotation by 90° and, therefore, after its extraction from the cavity (27).

14. The bending method according to one of the claims from 9 to 13, wherein the accompanying element (17) pushes the straw (1) towards the second bending element (16) up to a 90° rotation of the completely "U"-bent straw (1) keeping the straw (1) clamped between the accompanying element (17) and the second bending element (16).

15. A unit to bend a straw (1) comprising:
a bending drum (12), which is mounted so as to rotate around a rotation axis (13) and is provided with at least one seat (14) designed to house the straight straw (1) and with a cavity (27) arranged at the seat (14) and radially more on the inside than the seat (14); the unit being **characterised in that** it comprises
a bending element (15), which is configured to radially move relative to the seat (14) so as to push the straw (1) into the cavity (27) in order to at least partially bend the straw (1) in a "U-shape against at least one wall (29) of the cavity (27) .

## Patentansprüche

1. Verfahren, um einen Trinkhalm (1) zu biegen, umfassend die Schritte des:
Bewirkens, dass sich eine Biegetrommel (12), die mit mindestens einer Aufnahme (14), die ausgelegt ist, den geraden Trinkhalm (1) aufzunehmen, und mit einem Hohlraum (27), der an der Aufnahme (14) und radial mehr auf der Innenseite als die Aufnahme (14) angeordnet ist, versehen ist, um eine Drehachse (13) dreht;
Zuführens des geraden Trinkhalms (1) zu der Aufnahme (14); und
Schiebens des Trinkhalms (1) in den Hohlraum (27) mittels der Wirkung eines ersten Biegeelements (15), das sich in Bezug auf die Aufnahme (14) radial bewegt zum zumindest teilweisen Biegen des Trinkhalms (1) in eine "U"-Form gegen mindestens eine Wand (29) des Hohlraums (27).

2. Biegeverfahren nach Anspruch 1, wobei das erste Biegeelement (15) wie ein Bogen eines Kreises geformt ist, an einer festen Position um die Drehachse (13) angeordnet ist und eine radiale Position aufweist, die veränderlich ist, derart, dass die Drehung der Biegetrommel (12) eine fortschreitende, relative, radiale Bewegung zwischen dem ersten Biegeelement (15) und der Aufnahme (14) bewirkt.

3. Biegeverfahren nach Anspruch 1 oder 2, und umfassend den weiteren Schritt des Begleitens der Einführung des Trinkhalms (1) in den Hohlraum (27) mittels der Wirkung eines Begleitelements (17), das in Bezug auf das erste Biegeelement (15) auf der gegenüberliegenden Seite des Trinkhalms (1) angeordnet ist und sich in Bezug auf die Aufnahme (14) radial bewegt.

4. Biegeverfahren nach Anspruch 3, wobei das Begleitelement (17) zumindest wie ein Bogen eines Kreises geformt ist, an einer festen Position um die Drehachse (13) angeordnet ist und eine radiale Position aufweist, die veränderlich ist, derart, dass die Drehung der Biegetrommel (12) eine fortschreitende, relative, radiale Bewegung zwischen dem Begleitelement (17) und der Aufnahme (14) bewirkt.

5. Biegeverfahren nach Anspruch 4, wobei die Biegetrommel (12) einen Schlitz (25) aufweist, der radial orientiert ist, von einem Boden des Hohlraums (27) ausgeht und konfiguriert ist, das Begleitelement (17) zu enthalten.

6. Biegeverfahren nach einem der Ansprüche von 1 bis 5, wobei der Hohlraum (27) aufweist:
einen äußeren Abschnitt (28), der auf einer Seite durch eine erste radial angeordnete Wand (29) und auf der gegenüberliegenden Seite durch eine zweite Wand (30) begrenzt ist, die mit der ersten Wand (29) einen spitzen Winkel bildet und in einem gewissen Abstand von der ersten Wand (29) angeordnet ist; und
einen inneren Abschnitt (31), der radial weiter nach innen als der äußere Abschnitt (28) angeordnet ist und auf einer Seite durch die erste Wand (29) und auf der gegenüberliegenden Seite durch eine dritte Wand (32) begrenzt ist, die mit der zweiten Wand (30) verbunden ist und radial und daher parallel zur ersten Wand (29) angeordnet ist.

7. Biegeverfahren nach Anspruch 6, wobei die erste Wand (29) mit einer pneumatischen Vorrichtung (35) versehen ist, die betätigt werden kann, um einen Strahl komprimierter Luft zu erzeugen, der den Trinkhalm (1) in Richtung der zweiten Wand (30) des äußeren Abschnitts (28) schiebt.

8. Biegeverfahren nach Anspruch 6 oder 7, wobei das erste Biegeelement (15) den Trinkhalm (1) in den inneren Abschnitt (31) des Hohlraums (27) schiebt.

9. Biegeverfahren nach Anspruch 8 und umfassend den weiteren Schritt des Entnehmens des zumindest teilweise "U"-förmig gebogenen Trinkhalms (1) aus dem inneren Abschnitt (31) des Hohlraums (27) durch radiales Schieben des Trinkhalms (1) nach außen mittels der Wirkung eines Begleitelements (17), das auf der in Bezug auf das erste Biegeelement (15) dem Trinkhalm (1) gegenüberliegenden Seite angeordnet ist und sich in Bezug auf die Aufnahme (14) radial bewegt.

10. Biegeverfahren nach Anspruch 9, und umfassend den weiteren Schritt des Schiebens des zumindest teilweise "U"-förmig gebogenen und aus dem inneren Abschnitt (31) entnommen Trinkhalms (1) gegen die zweite Wand (30) des äußeren Abschnitts (28) mittels der Wirkung eines zweiten Biegeelements (16), das sich in Bezug auf die Aufnahme (14) axial bewegt.

11. Biegeverfahren nach Anspruch 10, wobei:
das zweite Biegeelement (16) wie ein Bogen eines Kreises geformt ist, an einer festen Position um die Drehachse (13) angeordnet ist und eine axiale Position aufweist, die veränderlich ist, derart, dass die Drehung der Biegetrommel (12) eine fortschreitende, relative, axiale Bewegung zwischen dem zweiten Biegeelement (16) und der Aufnahme (14) bewirkt; und
das zweite Biegeelement (16) einen Haltezahn (33) umfasst, der mit einem Ende (2) des Trinkhalms (1) in Eingriff gelangt.

12. Biegeverfahren nach Anspruch 10 oder 11 und umfassend die weiteren Schritte des:
Abschließens des Biegens des Trinkhalms (1) in eine "U"-Form durch Schieben des zumindest teilweise "U"-förmig gebogenen Trinkhalms (1) gegen die zweite Wand (30) des äußeren Abschnitts (28) mittels der Wirkung des zweiten Biegeelements (16), das sich in Bezug auf die Aufnahme (14) axial bewegt; und
Drehens des vollständig in einer "U"-Form gebogenen Trinkhalms (1) um 90° mittels der Wirkung des zweiten Biegeelements (16).

13. Biegeverfahren nach Anspruch 12, wobei:
der Hohlraum (27) eine Umfangsbreite aufweist, die lediglich geringfügig größer als eine Dicke des Trinkhalms (1) ist, derart, um in der Lage zu sein den zumindest teilweise "U"-förmig gebogenen Trinkhalm (1) lediglich dann zu enthalten, wenn der zumindest teilweise "U"-förmig gebogene Trinkhalm (1) radial orientiert ist; und
neben dem Hohlraum (27) ein Gehäuse (34) erhalten wird, das derart geformt ist, um den vollständig "U"-förmig gebogenen Trinkhalm (1) nach seiner Drehung um 90° und daher nach seiner Entnahme aus dem Hohlraum (27) zu enthalten.

14. Biegeverfahren nach einem der Ansprüche von 9 bis 13, wobei das Begleitelement (17) den Trinkhalm (1) bis zu einer 90°-Drehung des vollständig "U"-förmig gebogenen Trinkhalms (1) in Richtung des zweiten Biegeelements (16) schiebt, wobei der Trinkhalm (1) zwischen dem Begleitelement (17) und dem zweiten Biegeelement (16) eingeklemmt gehalten wird.

15. Einheit, um einen Trinkhalm (1) zu biegen, umfassend:
eine Biegetrommel (12), die derart angebracht ist, sich um eine Drehachse (13) zu drehen, und mit mindestens einer Aufnahme (14), die ausgelegt ist, den geraden Trinkhalm (1) aufzunehmen, und mit einem Hohlraum (27), der an der Aufnahme (14) und radial mehr auf der Innenseite als die Aufnahme (14) angeordnet ist, versehen ist;
wobei die Einheit **dadurch gekennzeichnet ist, dass** sie ein Biegeelement (15) umfasst, das konfiguriert ist, sich in Bezug auf die Aufnahme (14) radial zu bewegen, derart, um den Trinkhalm (1) in den Hohlraum (27) zu schieben, um den Trinkhalm (1) gegen mindestens eine Wand (29) des Hohlraums (27) zumindest teilweise in eine "U"-Form zu biegen.

## Revendications

1. Procédé pour plier une paille (1) comprenant les étapes suivantes :
amener un tambour de pliage (12), qui est prévu avec au moins un siège (14) conçu pour loger la paille (1) droite et avec une cavité (27) agencée au niveau du siège (14) et radialement plus à l'intérieur que le siège (14), à tourner autour d'un axe de rotation (13) ;
alimenter la paille (1) droite au siège (14) ; et
pousser la paille (1) dans la cavité (27) au moyen de l'action d'un premier élément de pliage (15), qui se déplace radialement par rapport au siège (14) pour plier au moins partiellement la paille (1) dans une forme de « U » contre au moins une paroi (29) de la cavité (27).

2. Procédé de pliage selon la revendication 1, dans lequel le premier élément de pliage (15) est formé comme un arc de cercle, est agencé dans une position fixe autour de l'axe de rotation (13) et a une position radiale qui est variable, de sorte que la rotation du tambour de pliage (12) provoque un mouvement radial progressif relatif entre le premier élément de pliage (15) et le siège (14).

3. Procédé de pliage selon la revendication 1 ou 2, et comprenant l'étape supplémentaire pour accompagner l'introduction de la paille (1) dans la cavité (27) au moyen de l'action d'un élément d'accompagnement (17), qui est agencé sur le côté opposé de la paille (1) par rapport au premier élément de pliage ((15) et se déplace radialement par rapport au siège (14).

4. Procédé de pliage selon la revendication 3, dans lequel l'élément d'accompagnement (17) est au moins formé comme un arc de cercle, est agencé dans une position fixe autour de l'axe de rotation (13) et a une position radiale qui est variable, de sorte que la rotation du tambour de pliage (12) provoque un mouvement radial progressif relatif entre l'élément d'accompagnement (17) et le siège (14).

5. Procédé de pliage selon la revendication 4, dans lequel le tambour de pliage (12) a une fente (25), qui est radialement orientée, commence à partir d'un fond de la cavité (27) et est configurée pour contenir l'élément d'accompagnement (17).

6. Procédé de pliage selon l'une des revendications 1 à 5, dans lequel la cavité (27) a :
une partie externe (28), qui est délimitée, d'un côté, par une première paroi agencée radialement (29) et, sur le côté opposé, par une deuxième paroi (30), qui forme un angle aigu avec la première paroi (29) et est agencée à une certaine distance de la première paroi (29) ; et
une partie interne (31) qui est radialement agencée davantage vers l'intérieur de la partie externe (28) et est délimitée, d'un côté, par la première paroi (29) et sur le côté opposé, par une troisième paroi (32), qui est assemblée à la deuxième paroi (30) et est agencée radialement et, par exemple, parallèle à la première paroi (29).

7. Procédé de pliage selon la revendication 6, dans lequel la première paroi (29) est prévue avec un dispositif pneumatique (35), qui peut être actionné afin de générer un jet d'air comprimé, qui pousse la paille (1) vers la deuxième paroi (30) de la partie externe (28) .

8. Procédé de pliage selon la revendication 6 ou 7, dans lequel le premier élément de pliage (15) pousse la paille (1) dans la partie interne (31) de la cavité (27).

9. Procédé de pliage selon la revendication 8 et comprenant l'étape supplémentaire pour extraire la paille (1) pliée au moins partiellement en « U » de la partie interne (31) de la cavité (27) en poussant radialement la paille (1) vers l'extérieur au moyen de l'action d'un élément d'accompagnement (17), qui est agencé sur le côté opposé de la paille (1) par rapport au premier élément de pliage (15) et se déplace radialement par rapport au siège (14).

10. Procédé de pliage selon la revendication 9 et comprenant l'étape supplémentaire pour pousser la paille (1), qui est au moins partiellement pliée en « U » et extraite de la partie interne (31), contre la deuxième paroi (30) de la partie externe (28) au moyen de l'action d'un second élément de pliage (16), qui se déplace axialement par rapport au siège (14).

11. Procédé de pliage selon la revendication 10, dans lequel :
le second élément de pliage (16) est formé comme un arc de cercle, est agencé dans une position fixe autour de l'axe de rotation (13) et a une position axiale qui est variable de sorte que la rotation du tambour de pliage (12) provoque un mouvement axial progressif relatif entre le second élément de pliage (16) et le siège (14) ; et
le second élément de pliage (16) comprend une dent de maintien (33), qui met en prise une extrémité (2) de la paille (1).

12. Procédé de pliage selon la revendication 10 ou 11, et comprenant les étapes supplémentaires suivantes :
compléter le pliage de la paille (1) dans une forme de « U » en poussant la paille (1) au moins partiellement pliée en « U » contre la deuxième paroi (30) de la partie externe (28) au moyen de l'action du second élément de pliage (16), qui se déplace axialement par rapport au siège (14) ; et
faire tourner la paille (1) complètement pliée selon une forme de « U » à 90° au moyen de l'action du second élément de pliage (16).

13. Procédé de pliage selon la revendication 12, dans lequel :
la cavité (27) a une largeur circonférentielle qui n'est que légèrement supérieure à une épaisseur de la paille (1) afin de pouvoir contenir la paille (1) au moins partiellement pliée en « U » uniquement lorsque la paille (1) au moins partiellement pliée en « U » est orientée de manière radiale ; et à proximité de la cavité (27), on obtient un boîtier (34), qui est formé afin de contenir la paille (1) complètement pliée en « U » après sa rotation à 90° et par conséquent, après son extraction de la cavité (27).

14. Procédé de pliage selon l'une des revendications 9 à 13, dans lequel l'élément d'accompagnement (17) pousse la paille (1) vers le second élément de pliage (16) jusqu'à une rotation de 90° de la paille (1) complètement pliée en « U », maintenant la paille (1) serrée entre l'élément d'accompagnement (17) et le second élément de pliage (16).

15. Unité pour plier une paille (1) comprenant :
un tambour de pliage (12) qui est monté pour tourner autour d'un axe de rotation (13) et est prévu avec au moins un siège (14) conçu pour loger la paille (1) droite et avec une cavité (27) agencée au niveau du siège (14) et radialement plus à l'intérieur que le siège (14) ; l'unité étant **caractérisée en ce qu'**elle comprend :
un élément de pliage (15) qui est configuré pour se déplacer, radialement, par rapport au siège (14) afin de pousser la paille (1) dans la cavité (27) afin de plier au moins partiellement la paille (1) selon une forme de « U » contre au moins une paroi (29) de la cavité (27).
